# EUROPÄISCHE PATENTSCHRIFT

(11) **EP 1 188 844 B1**
(45) Veröffentlichungstag und Bekanntmachung des Hinweises auf die Patenterteilung: **14.04.2004**
(21) Anmeldenummer: 01120842.8
(22) Anmeldetag: 30.08.2001
(51) Int. Cl.: C22C 5/04, C22C 1/10

(54) **Durch feinverteilte, kleine Teilchen aus Unedelmetalloxid dispersionsverfestigter, goldfreier Platin-Werkstoff**
A gold free platinum alloy which is dispersion strengthened by means of small, non-noble metal oxides
Alliage de platine non contenant pas d'or renforcé par dispersion d'oxydes petites et non-noble

(30) Priorität: 18.09.2000 DE 10046456
(43) Veröffentlichungstag der Anmeldung: 20.03.2002
(73) Patentinhaber: W.C. Heraeus GmbH & Co. KG, 63450 Hanau (DE)
(72) Erfinder: Manhardt, Harald, 63486 Bruchköbel (DE); Lupton, David Francis, Dr., 63571 Gelnhausen (DE); Kock, Wulf, Dr., 63755 Alzenau (DE)
(74) Vertreter: Kühn, Hans-Christian

(56) Entgegenhaltungen:
- EP-A- 0 320 877
- EP-A- 0 848 070
- WO-A-81/00977
- WO-A-81/01013
- GB-A- 2 085 028
- US-A- 4 252 558

## Beschreibung

Die Erfindung betrifft einen durch feinverteilte, kleine Teilchen aus Unedelmetalloxid dispersionsverfestigten, goldfreien Platin-Werkstoff.

Aus DE-PS 31 02 342 ist eine kornstabilisierte Legierung aus einem komstabilisierenden Bestandteil und, von Verunreinigungen abgesehen, Gold sowie einem oder mehreren Metallen der Platingruppe als Rest offenbart, wobei die Gruppe der Platinmetalle gebildet wird von Platin, Rhodium, Palladium, Ruthenium, Iridium, der kornstabilisierende Bestandteil ein Oxid, Carbid, Nitrid und/oder Silicid von Scandium, Yttrium, Thorium, Zirkonium, Hafnium, Titan, Aluminium oder einem Lanthanid ist, sein Anteil nicht über 0,5 Gewichts-% und der Goldanteil im Bereich 2 bis 10 Gewichts-% liegt.

Aus DE 197 14 365 A1 ist ein durch feinverteilte, kleine Teilchen aus Unedelmetalloxiden dispersionsverfestigter Platin-Werkstoff offenbart, wobei das Unedelmetall Cer oder ein Gemisch aus mindestens zwei der Elemente Yttrium, Zirkonium und Cer ist, der Unedelmetallgehalt 0,005 bis 1 Gewichts-% beträgt, mindestens 75 Gewichts-% des Unedelmetalls als Oxid vorliegen und die Bildung des Unedelmetalloxids auf der Wärmebehandlung einer in kompakter Form vorliegenden Platin-Unedelmetall-Legierung in oxidierendem Medium bei 600 bis 1400 °C beruht.

Nachteilig bei der Herstellung dieses Werkstoffes ist die Tatsache, dass die Zeitdauer der Oxidationsbehandlung typischerweise 200 bis 400 Stunden zum Erreichen des erforderlichen Oxidationsgrades beträgt, was bei diesen sehr teuren Materialien zu einer erheblichen Kapitalbindung führt.

WO-A- 8101013 offenbart eine dispersionsverfestigte Platin-legierung, die, durch 0.1 bis 5.0 vol.% oxyden der Gruppen IIA, IIIA, IIIB, IVB, VB, VIB und VIIB bestehen konnen.

Aus dem Vorgenannten ergibt sich das Problem, einen dispersionsverfestigten Platinwerkstoff bereitzustellen, der eine möglichst zu dessen Herstellung geringe Zeitdauer hinsichtlich der

Aus dem Vorgenannten ergibt sich das Problem, einen dispersionsverfestigten Platinwerkstoff bereitzustellen, der eine möglichst zu dessen Herstellung geringe Zeitdauer hinsichtlich der Oxidationsbehandlung benötigt. Darüber hinaus ergibt sich das Problem, mit Hilfe eines neuartigen Verfahrens, die Oxidationsbehandlung zeitlich erheblich zu verkürzen.

Dieses Problem wird erfindungsgemäß durch einen dispersionsverfestigten, goldfreien Platinwerkstoff nach Anspruch 1 sowie durch ein entsprechendes Herstellungsverfahren nach Anspruch 9 sowie durch Verwendungen nach den Ansprüchen 21 bis 27 gelöst.

Der erfindungsgemäße durch feinverteilte, kleine Teilchen aus Unedelmetalloxid dispersionsverfestigte goldfreie Platinwerkstoff weist ein Unedelmetall auf, das entweder Scandium mit 0,01 - 0,5 Gewichts-% oder ein Gemisch/eine Legierung aus Scandium und mindestens einem Metall aus der Gruppe Zirkonium, Yttrium, Cer mit einem Unedelmetallgesamtgehalt von 0,05 - 0,5 Gewichts-% ist.

Erfindungswesentlich ist die Tatsache, dass durch die Verwendung des Unedelmetalls Scandium als teilweiser oder vollständiger Ersatz für Yttrium die Dauer der Oxidationsbehandlung bis zum Erreichen des erforderlichen Oxidationsgrades drastisch verkürzt wird.

Das Erreichen des Oxidationsgrades von 75 % muß für die Verwendung und Weiterverarbeitung dieser Werkstoffe erreicht werden, da bei einem geringeren Oxidationsgrad die erforderliche mechanische Festigkeit nicht in allen Fällen erreicht wird, die Gefahr eines verstärkten Korrosionsangriffs beispielsweise in Glasschmelzen besteht und die Schweißbarkeit des Werkstoffs beeinträchtigt wird.

Weiterhin ist es vorteilhaft, wenn die Bildung des Unedelmetalloxids auf der Wärmebehandlung einer in kompakter Form, beispielsweise in Form von Blechen mit 2 bis 3 mm Dicke, vorliegenden Platin-Unedelmetall-Legierung in oxidierendem Medium bei 600 °C bis 1400 °C beruht, da sich diese Bedingungen bewährt haben. Das hierzu erforderlich oxidierende Medium bedeutet im Sinne der Erfindung ein Medium, das in dem Temperaturbereich von 600 bis 1400 °C eine Oxidation des Unedelmetalls, nicht jedoch des Edelmetalls bewirkt. Bevorzugt ist eine Atmosphäre aus Luft, Sauerstoff, Wasserdampf oder einem Gemisch aus Wasserdampf und Wasserstoff, Edelgas, besonders Helium oder Argon, oder Stickstoff.

Besonders bewährt hat es sich, wenn mindestens 90 Gewichts-% des Unedelmetalls als Oxid vorliegen.

Dies gilt in dem entsprechenden Maße für dispersionsverfestigtes Platin, dispersionsverfestigte Platin-Rhodium- oder Platin-lridium-Legierungen, insbesondere wenn der Rhodiumgehalt der Platin-Rhodium-Legierung 1 bis 25, insbesondere 10, Gewichts-% oder der Irdium-Gehalt der Platin-Iridium-Legierung 1 bis 30, insbesondere 10, Gewichts-% beträgt.

Beim erfindungsgemäßen Verfahren zur Herstellung von durch feinverteilte, kleine Teilchen aus Unedelmetalloxid dispersionsverfestigtem, goldfreiem Platin-Werkstoff wird eine Platin-Unedelmetall-Legierung erschmolzen, vergossen und wärmebehandelnd oxidiert, wobei das Unedelmetall entweder Scandium mit 0,01 - 0,5 Gewichts-% oder ein Gemisch/eine Legierung aus Scandium und mindestens einem Metall aus der Gruppe Zirkonium, Yttrium, Cer mit einem Unedelmetallgesamtgehalt von 0,05 bis 0,5 Gewichts-% ist.

**Dabei sind** nach der Oxidation mindestens 75, insbesondere 90, Gewichts-% des Unedelmetalls oxidiert; und/oder die Oxidation **wird vorteilhafterweise** mittels einer Wärmebehandlung in oxidierendem Medium bei 600 bis 1.400 °C durchgeführt.

Besonders bewährt hat sich als oxidierendes Medium eine Atmosphäre aus Luft, Sauerstoff, Wasserdampf oder einem Gemisch aus Wasserdampf und Wasserstoff, Edelgas oder Stickstoff.

Weitere Vorteile sind das sehr gute Umformverhalten und die Schweißbarkeit sowohl der erschmolzenen und vergossenen Platin-Unedelmetall-Legierungen als auch des dispersionsverfestigten Platinwerkstoffes, so dass vor und/oder nach der wärmebehandelnden Oxidation eine Kaltverformung, Warmverformung oder vor der wärmebehandelnden Oxidation ein Schweißverfahren angewandt werden kann. Aufgrund letzterer Vorgehensweise ist es möglich, dass die Schweißnaht und der Grundwerkstoff weitestgehend die gleiche Mikrostruktur und die gleichen Festigkeitswerte aufweisen.

Dies gilt in dem entsprechenden Maße für dispersionsverfestigtes Platin, dispersionsverfestigte Platin-Rhodium- oder Platin-lridium-Legierungen, insbesondere wenn der Rhodiumgehalt der Platin-Rhodium-Legierung 1 bis 25, insbesondere 10, Gewichts-% oder der Irdium-Gehalt der Platin-lridium-Legierung 1 bis 30, insbesondere 10, Gewichts-% beträgt. für in der Glasindustrie und im Laboratorium einzusetzende Geräte sowie zur Herstellung von Beschichtungen.

Darüber hinaus hat sich die Verwendung eines Unedelmetall enthaltenden, bei Oxidation zumindest eines Teils des Unedelmetalls zu einem erfindungsgemäßen dispersionsgehärteten Platin-Werkstoff oxidierbaren, goldfreien Platin-Werkstoffs als Schweißzusatzwerkstoff bewährt. Aufgrund dieser Vorgehensweise ist es möglich, dass Schweißnaht und Grundwerkstoff weitestgehend die gleiche Mikrostruktur und die gleichen Festigkeitswerte aufweisen können.

Vor allem hat sich die Verwendung von Scandium als Ersatz von Yttrium in durch feinverteilte, kleine Teilchen aus Unedelmetalloxid dispersionsverfestigten Platin-Werkstoffen, insbesondere in den erfindungsgemäßen, bewährt.

Das nachfolgende Beispiel dient zur näheren Erläuterung der Erfindung.

### Beispiel 1:

In einem Vakuuminduktionsofen wurde aus Pt und aus 2 Vorlegierungen (Pt mit 28 % Zr und Pt mit 1 % Sc) unter Verwendung eines Zirkoniumoxidtiegels eine Pt-Legierung mit 0,18 % Zr und 0,015 % Sc hergestellt. Der Ingot wurde gehobelt und durch Kaltwalzen wurden Bleche mit einer Dicke von 2,4 mm hergestellt. Diese Bleche wurden dann 120 Stunden bei 1030 °C an Luft oxidiert. Der theoretische Sauerstoffgehalt bei vollständiger (100 %) Oxidation sollte 715 ppm Sauerstoff betragen, der gemessene maximale Sauerstoffgehalt betrug 770 ppm. Nach 96 Stunden wurde somit eine vollständige Oxidation der mit Scandium dotierten Bleche erreicht, wie aus der Tabelle zu ersehen ist.

### Beispiel 2:

In einem Vakuuminduktionsofen wurde aus Pt und aus 2 Vorlegierungen (Pt mit 28 % Zr und Pt mit 2,8 % Y) unter Verwendung eines Zirkoniumoxidtiegels eine Pt-Legierung mit 0,18 % Zr und 0,018 % Y hergestellt. Der Ingot wurde gehobelt und durch Kaltwalzen wurden Bleche mit einer Dicke von 2,4 mm hergestellt. Diese Bleche wurden dann bis zu 240 Stunden bei 1030 °C an Luft oxidiert. Der theoretische Sauerstoffgehalt bei vollständiger (100 %) Oxidation sollte 680 ppm Sauerstoff betragen, der gemessene maximale Sauerstoffgehatt betrug 730 ppm. Nach etwa 184 Stunden wurde somit eine vollständige Oxidation der mit Yttrium dotierten Bleche erreicht, wie aus der Tabelle zu ersehen ist.

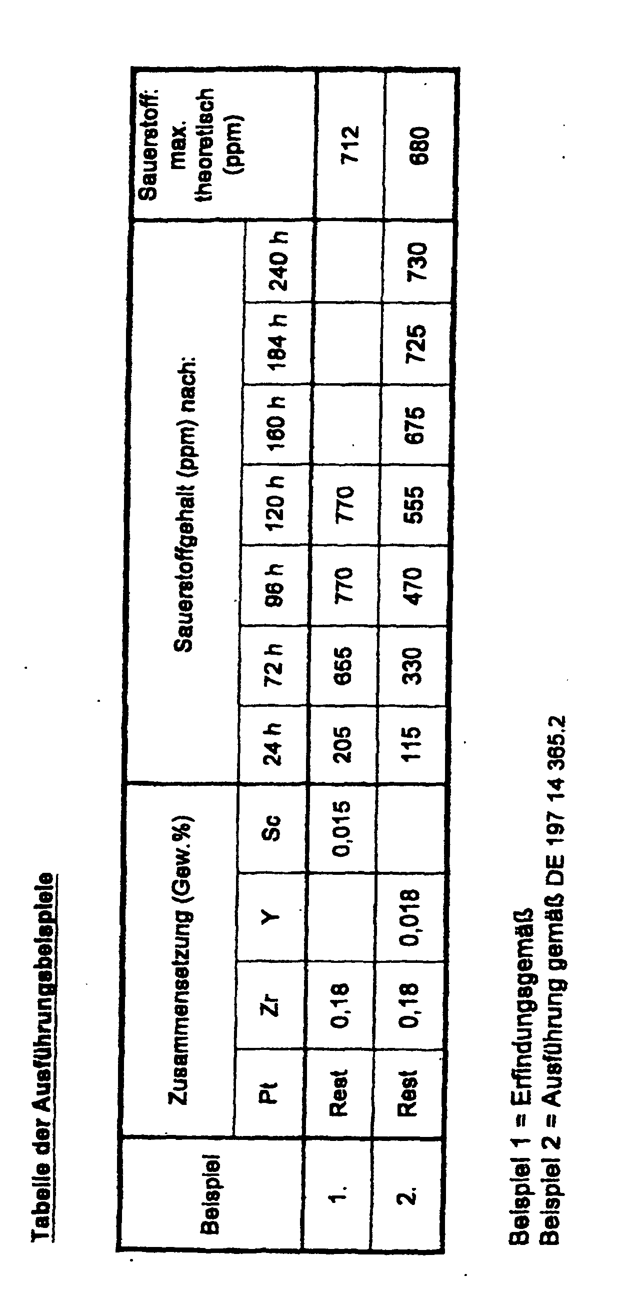

Aus der Tabelle ist deutlich zu erkennen, dass bei Verwendung von Scandium als Ersatz für Yttrium in diesem speziellen Fall nahezu eine Halbierung der für die vollständige Oxidation des Unedelmetallgehalts erforderlichen Zeit erreicht worden ist.

Der theoretisch maximale Sauerstoffgehalt der Legierungen basiert auf der Annahme, dass die darin enthaltenden Unedelmetalle Yttrium, Scandium und Zirkonium bis zur vollständigen Umwandlung in ihre stöchiometrischen Oxide Y₂O₃, Sc₂O₃ bzw. ZrO₂ oxidiert werden. Häufig ist jedoch eine leichte Überschreitung des nominellen maximalen Wertes festzustellen, da weitere und als Verunreinigung in der Legierung vorhandene Unedelmetalle wie beispielsweise Silicium und Aluminium aufoxidiert werden.

## Patentansprüche

1. Durch feinverteilte, kleine Teilchen aus Unedelmetalloxid dispersionsverfestigter, goldfreier Platin-Werkstoff, wobei das Unedelmetall entweder Sc mit 0,01 - 0,5 Gewichts-% oder ein Gemisch/eine Legierung aus Sc und mindestens einem Metall aus der Gruppe Zr, Y, Ce mit einem Unedelmetallgesamtgehalt von 0,05 bis 0,5 Gewichts-% ist, und mindestens 75 Gewichts-% des Unedelmetalls als Oxid vorliegen.

2. Platinwerkstoff nach Anspruch 1, **dadurch gekennzeichnet, dass** die Bildung des Unedelmetalloxids auf der Wärmebehandlung einer in kompakter Form vorliegenden Platin-Unedelmetall-Legierung in oxidierendem Medium bei 600 °C bis 1400 °C beruht.

3. Platinwerkstoff nach einem der Ansprüche 1 bis 2, **dadurch gekennzeichnet, dass** mindestens 90 Gewichts-% des Unedelmetalls als Oxid vorliegen.

4. Platinwerkstoff nach einem der Ansprüche 1 bis 3, **dadurch gekennzeichnet, dass** dieser aus dispersionsverfestigtem Platin, dispersionsverfestigter Platin-Rhodium-Legierung oder dispersionsverfestigter Platin-Iridium-Legierung besteht.

5. Platinwerkstoff nach Anspruch 4, **dadurch gekennzeichnet, dass** der Rhodiumgehalt der Platin-Rhodium-Legierung 1 bis 25 Gewichts-% beträgt.

6. Platinwerkstoff nach Anspruch 5, **dadurch gekennzeichnet, dass** der Rhodiumgehalt der Platin-Rhodium-Legierung 10 Gewichts-% beträgt.

7. Platinwerkstoff nach Anspruch 6, **dadurch gekennzeichnet, dass** der Iridium-Gehalt der Platin-Iridium-Legierung 1 bis 30 Gewichts-% beträgt.

8. Platinwerkstoff nach Anspruch 7, **dadurch gekennzeichnet, dass** der Iridium-Gehalt der Platin-Iridium-Legierung 10 Gewichts-% beträgt.

9. Verfahren zur Herstellung von durch feinverteilte, kleine Teilchen aus Unedelmetalloxid dispersionsverfestigtem, goldfreiem Platin-Werkstoff, wobei eine Platin-Unedelmetall-Legierung erschmolzen, vergossen und wärmebehandelnd oxidiert wird, wobei das Unedelmetall entweder Sc mit 0,01 - 0,5 Gewichts-% oder ein Gemisch/eine Legierung aus Sc und mindestens einem Metall aus der Gruppe Zr, Y, Ce mit einem Unedelmetallgesamtgehalt von 0,05 bis 0,5 Gewichts-% ist, und dass nach der Oxidation mindestens 75 Gewichts-% des Unedelmetalls oxidiert sind.

10. Verfahren nach Anspruch 9, **dadurch gekennzeichnet, dass** die Oxidation mittels einer Wärmebehandlung in oxidierendem Medium bei 600 bis 1.400 °C durchgeführt wird.

11. Verfahren nach einem der Ansprüche 9 bis 10, **dadurch gekennzeichnet, dass** nach der Oxidation mindestens 90 Gewichts-% des Unedelmetalls oxidiert sind.

12. Verfahren nach einem der Ansprüche 9 bis 11, **dadurch gekennzeichnet, dass** als oxidierendes Medium eine Atmosphäre aus Luft, Sauerstoff, Wasserdampf oder einem Gemisch aus Wasserdampf und Wasserstoff, Edelgas oder Stickstoff eingesetzt wird.

13. Verfahren nach einem der Ansprüche 9 bis 12, **dadurch gekennzeichnet, dass** vor und/oder nach der wärmebehandelnden Oxidation eine Kaltverformung erfolgt.

14. Verfahren nach einem der Ansprüche 9 bis 13, **dadurch gekennzeichnet, dass** vor und/oder nach der wärmebehandelnden Oxidation eine Warmverformung erfolgt.

15. Verfahren nach einem der Ansprüche 9 bis 14, **dadurch gekennzeichnet, dass** vor der wärmebehandelnden Oxidation ein Schweißverfahren angewandt wird.

16. Verfahren nach einem der Ansprüche 9 bis 15, **dadurch gekennzeichnet, dass** ein Platin-Werkstoff verwendet wird, der aus Platin, Platin-Rhodium-Legierung oder Platin-Iridium-Legierung besteht.

17. Verfahren nach einem der Ansprüche 9 bis 16, **dadurch gekennzeichnet, dass** eine Rhodium enthaltende Platin-Unedelmetall-Legierung mit einem Rhodiumgehalt von 1 bis 25 Gewichts-% erschmolzen und vergossen wird.

18. Verfahren nach Anspruch 17, **dadurch gekennzeichnet, dass** eine Platin-Rhodium-Legierung mit einem Rhodiumgehalt von 10 Gewichts-% verwendet wird.

19. Verfahren nach einem der Ansprüche 9 bis 16, **dadurch gekennzeichnet, dass** eine Iridium enthaltende Platin-Unedelmetall-Legierung mit einem Iridiumgehalt von 1 bis 30 Gewichts-% erschmolzen und vergossen wird.

20. Verfahren nach Anspruch 19, **dadurch gekennzeichnet, dass** eine Platin-Iridium-Legierung mit einem Iridiumgehalt von 10 Gewichts-% verwendet wird.

21. Verwendung des dispersionsverfestigten Platin-Werkstoffes nach einem der Ansprüche 1 bis 8 für in der Glasindustrie einzusetzende Geräte.

22. Verwendung des dispersionsverfestigten Platin-Werkstoffs nach einem der Ansprüche 1 bis 8 für im Laboratorium einzusetzende Geräte.

23. Verwendung des dispersionsverfestigten Platin-Werkstoffs nach einem der Ansprüche 1 bis 8 zur Herstellung von Beschichtungen.

24. Verwendung eines Unedelmetall enthaltenden, bei Oxidation zumindest eines Teils des Unedelmetalls zu einem dispersionsgehärteten Platin-Werkstoff nach einem der Ansprüche 1 bis 8 oxidierbaren, goldfreien Platin-Werkstoffs als Schweißzusatzwerkstoff..

25. Verwendung von Scandium als Ersatz von Yttrium in durch feinverteilte, kleine Teilchen aus Unedelmetalloxid dispersionsverfestigten Platin-Werkstoffen.

26. Verwendung von Scandium als Ersatz von Yttrium in Platin-Werkstoffen nach einem der Ansprüche 1 bis 8.

27. Verwendung von Scandium als Ersatz von Yttrium in nach einem Verfahren nach einem der Ansprüche 9 bis 20 hergestellten Platin-Werkstoffen.

## Claims

1. Gold-free platinum material dispersion-hardened by finely divided, small particles of non-noble metal oxide, the non-noble metal being either Sc in an amount of 0.01 - 0.5% by weight or a mixture/an alloy of Sc and at least one metal from the group consisting of Zr, Y and Ce with a total non-noble metal content of 0.05 to 0.5% by weight, and at least 75% by weight of the non-noble metal being present as oxide.

2. Platinum material according to Claim 1, **characterized in that** the formation of the non-noble metal oxide is based on the heat treatment of a platinum/non-noble metal alloy, present in compact form, in an oxidizing medium at 600°C to 1400°C.

3. Platinum material according to either of Claims 1 and 2, **characterized in that** at least 90% by weight of the non-noble metal is present as oxide.

4. Platinum material according to any of Claims 1 to 3, **characterized in that** it consists of dispersion-hardened platinum, dispersion-hardened platinum-rhodium alloy or dispersion-hardened platinum-iridium alloy.

5. Platinum material according to Claim 4, **characterized in that** the rhodium content of the platinum-rhodium alloy is 1 to 25% by weight.

6. Platinum material according to Claim 5, **characterized in that** the rhodium content of the platinum-rhodium alloy is 10% by weight.

7. Platinum material according to Claim 6, **characterized in that** the iridium content of the platinum-iridium alloy is 1 to 30% by weight.

8. Platinum material according to Claim 7, **characterized in that** the iridium content of the platinum-iridium alloy is 10% by weight.

9. Process for the preparation of gold-free platinum material dispersion-hardened by finely divided, small particles of non-noble metal oxide, a platinum/non-noble metal alloy being melted, cast and oxidized with heat treatment, the non-noble metal being either Sc in an amount of 0.01 - 0.5% by weight or a mixture/an alloy of Sc and at least one metal from the group consisting of Zr, Y and Ce with a total non-noble metal content of 0.05 - 0.5% by weight, and, after the oxidation, at least 75% by weight of the non-noble metal being present in oxidized form.

10. Process according to Claim 9, **characterized in that** the oxidation is carried out by means of heat treatment in an oxidizing medium at 600 to 1400°C.

11. Process according to either of Claims 9 and 10, **characterized in that**, after the oxidation, at least 90% by weight of the non-noble metal are present in oxidized form.

12. Process according to any of Claims 9 to 11, **characterized in that** an atmosphere comprising air, oxygen, steam or a mixture of steam and hydrogen, noble gas or nitrogen is used as the oxidizing medium.

13. Process according to any of Claims 9 to 12, **characterized in that** cold working is effected before and/or after the oxidation with heat treatment.

14. Process according to any of Claims 9 to 13, **characterized in that** hot working is effected before and/or after the oxidation with heat treatment.

15. Process according to any of Claims 9 to 14, **characterized in that** a welding method is used before the oxidation with heat treatment.

16. Process according to any of Claims 9 to 15, **characterized in that** a platinum material which consists of platinum, platinum-rhodium alloy or platinum-iridium alloy is used.

17. Process according to any of Claims 9 to 16, **characterized in that** a rhodium-containing platinum/non-noble metal alloy having a rhodium content of 1 to 25% by weight is melted and cast.

18. Process according to Claim 17, **characterized in that** a platinum-rhodium alloy having a rhodium content of 10% by weight is used.

19. Process according to any of Claims 9 to 16, **characterized in that** an iridium-containing platinum/non-noble metal alloy having an iridium content of 1 to 30% by weight is melted and cast.

20. Process according to Claim 19, **characterized in that** a platinum-iridium alloy having an iridium content of 10% by weight is used.

21. Use of the dispersion-hardened platinum material according to any of Claims 1 to 8 for devices to be used in the glass industry.

22. Use of the dispersion-hardened platinum material according to any of Claims 1 to 8 for devices to be used in the laboratory.

23. Use of the dispersion-hardened platinum material according to any of Claims 1 to 8 for the production of coatings.

24. Use of a gold-free platinum material, containing non-noble metal and oxidizable on oxidation of at least a part of the non-noble metal to give a dispersion-hardened platinum material according to any of Claims 1 to 8, as a welding filler material.

25. Use of scandium as a substitute for yttrium in platinum material dispersion-hardened by finely divided, small particles of non-noble metal oxide.

26. Use of scandium as a substitute for yttrium in platinum materials according to any of Claims 1 to 8.

27. Use of scandium as a substitute for yttrium in platinum materials prepared by a process according to any of Claims 9 to 20.

## Revendications

1. Matériau à base de platine ne contenant pas d'or, renforcé par dispersion de petites particules finement réparties d'oxyde métallique non précieux, le métal non précieux étant soit du Sc avec 0,01 à 0,5 % en poids soit un mélange/alliage de Sc et d'au moins un métal du groupe Zr, Y, Ce avec un pourcentage total de métal non précieux de 0,05 à 0,5 % en poids, et au moins 75 % en poids du métal non précieux étant sous forme d'oxyde.

2. Matériau à base de platine selon la revendication 1, **caractérisé en ce que** la formation de l'oxyde métallique non précieux repose sur le traitement thermique d'un alliage de platine et de métal non précieux sous forme compacte dans un milieu oxydant à une température de 600°C à 1400°C.

3. Matériau à base de platine selon l'une ou l'autre des revendications 1 et 2, **caractérisé en ce qu'**au moins 90 % en poids du métal non précieux est sous forme d'oxyde.

4. Matériau à base de platine selon l'une ou l'autre des revendications 1 à 3, **caractérisé en ce que** celui-ci est constitué soit par du platine renforcé par dispersion, soit par un alliage platine/rhodium renforcé par dispersion, soit par un alliage platine/iridium renforcé par dispersion.

5. Matériau à base de platine selon la revendication 4, **caractérisé en ce que** la teneur en rhodium de l'alliage platine/rhodium est de 1 à 25 % en poids.

6. Matériau à base de platine selon la revendication 5, **caractérisé en ce que** la teneur en rhodium de l'alliage platine/rhodium est de 10 % en poids.

7. Matériau à base de platine selon la revendication 6, **caractérisé en ce que** la teneur en iridium de l'alliage platine/iridium est de 1 à 30 % en poids.

8. Matériau à base de platine selon la revendication 7, **caractérisé en ce que** la teneur en iridium de l'alliage platine/iridium est de 10 % en poids.

9. Procédé de fabrication de matériau à base de platine ne contenant pas d'or, renforcé par dispersion de petites particules finement réparties d'oxyde métallique non précieux, dans lequel un alliage de platine/métal non précieux est fondu, coulé et oxydé par traitement thermique, le métal non précieux est soit du Sc avec 0,01 à 0,5 % en poids, soit un mélange/alliage de Sc et d'au moins un métal du groupe Zr, Y, Ce avec un pourcentage total de métal non précieux de 0,05 à 0,5 % en poids, et en ce qu'après l'oxydation, au moins 75 % en poids du métal non précieux sont oxydés.

10. Procédé selon la revendication 9, **caractérisé en ce que** l'oxydation est effectuée au moyen d'un traitement thermique dans un milieu oxydant à une température de 600°C à 1400°C.

11. Procédé selon l'une ou l'autre des revendications 9 et 10, **caractérisé en ce qu'**après l'oxydation, au moins 90 % en poids du métal non précieux sont oxydés.

12. Procédé selon l'une des revendications 9 à 11, **caractérisé en ce qu'**on utilise comme milieu oxydant une atmosphère d'air, d'oxygène, de vapeur d'eau ou d'un mélange de vapeur d'eau et d'hydrogène, de gaz rare ou d'azote.

13. Procédé selon l'une des revendications 9 à 12, **caractérisé en ce qu'**un façonnage à froid a lieu avant et/ou après l'oxydation par traitement thermique.

14. Procédé selon l'une des revendications 9 à 13, **caractérisé en ce qu'**un façonnage à chaud a lieu avant et/ou après l'oxydation par traitement thermique.

15. Procédé selon l'une des revendications 9 à 14, **caractérisé en ce qu'**un procédé de soudage est appliqué avant l'oxydation par traitement thermique.

16. Procédé selon l'une des revendications 9 à 15, **caractérisé en ce qu'**on utilise un matériau à base de platine qui est constitué soit par du platine, soit par un alliage platine/rhodium soit par un alliage platine/iridium.

17. Procédé selon l'une des revendications 9 à 16, **caractérisé en ce qu'**un alliage platine/métal non précieux contenant du rhodium est fondu et coulé avec une teneur de rhodium de 1 à 25 % en poids.

18. Procédé selon la revendication 17, **caractérisé en ce qu'**on utilise un alliage platine/rhodium avec une teneur de rhodium de 10 % en poids.

19. Procédé selon l'une des revendications 9 à 16, **caractérisé en ce qu'**un alliage platine/métal non précieux contenant de l'iridium est fondu et coulé avec une teneur d'iridium de 1 à 30 % en poids.

20. Procédé selon la revendication 19, **caractérisé en ce qu'**on utilise un alliage platine/iridium avec une teneur d'iridium de 10 % en poids.

21. Utilisation du matériau de platine renforcé par dispersion selon l'une des revendications 1 à 8 pour des appareils à mettre en oeuvre dans l'industrie du verre.

22. Utilisation du matériau de platine renforcé par dispersion selon l'une des revendications 1 à 8 pour des appareils à mettre en oeuvre en laboratoire.

23. Utilisation du matériau de platine renforcé par dispersion selon l'une des revendications 1 à 8 pour fabriquer des enduits.

24. Utilisation d'un matériau de platine ne contenant pas d'or et contenant un métal non précieux, oxydable lors de l'oxydation d'au moins une partie du métal non précieux pour donner un matériau de platine renforcé par dispersion, selon l'une des revendications 1 à 8, à titre de métal d'apport.

25. Utilisation de scandium à titre de remplacement à l'yttrium dans des matériaux à base de platine renforcés par dispersion de petites particules finement réparties d'oxyde de métal non précieux.

26. Utilisation de scandium à titre de remplacement à l'yttrium dans des matériaux à base de platine selon l'une des revendications 1 à 8.

27. Utilisation de scandium à titre de remplacement à l'yttrium dans des matériaux à base de platine produit selon un procédé selon l'une des revendications 9 à 20.
